Europäisches Patentamt

European Patent Office

Office européen des brevets

(19)

(11) EP 0 759 863 B1

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(21) Anmeldenummer: 95917358.4

(22) Anmeldetag: 22.04.1995

(51) Int. Cl.$^6$: **B60T 8/00**

(86) Internationale Anmeldenummer:
**PCT/EP95/01531**

(87) Internationale Veröffentlichungsnummer:
**WO 95/32113 (30.11.1995 Gazette 1995/51)**

(54) **SCHALTUNGSANORDNUNG FÜR EINE BREMSANLAGE MIT ELEKTRONISCHER REGELUNG DER BREMSKRAFTVERTEILUNG**

CIRCUIT ARRANGEMENT FOR A BRAKING SYSTEM WITH ELECTRONIC REGULATION OF THE BRAKING POWER DISTRIBUTION

CIRCUIT POUR SYSTEME DE FREINAGE AVEC REGULATION ELECTRONIQUE DE LA REPARTITION DE LA FORCE DE FREINAGE

(84) Benannte Vertragsstaaten:
**DE FR GB**

(30) Priorität: 21.05.1994 DE 4417935

(43) Veröffentlichungstag der Anmeldung:
**05.03.1997 Patentblatt 1997/10**

(73) Patentinhaber:
**Continental Teves AG & Co. oHG
60488 Frankfurt (DE)**

(72) Erfinder:
• **BÜTTNER, Hans-Joachim
  D-35644 Hohenahr (DE)**
• **BURKHARD, Dieter
  D-67714 Waldfischbach-Burgalben (DE)**
• **EHMER, Norbert
  D-65760 Eschborn (DE)**

(56) Entgegenhaltungen:
**DE-A- 3 838 536        DE-A- 4 337 498
FR-A- 2 539 687         GB-A- 2 135 413**

## Beschreibung

Die Erfindung bezieht sich auf eine Schaltungsanordnung für eine Bremsanlage mit elektronischer Regelung der Bremskraftverteilung auf Vorderachse und Hinterachse - im folgenden EBV genannt -, mit elektrisch steuerbaren Hydraulikventilen, die in den zu den Hinterradbremsen führenden Druckmittelleitungen und in Rückflußleitungen eingefügt sind, mit Radsensoren zur Ermittlung des Raddrehverhaltens und mit einer elektronischen Schaltung, die die Sensorsignale auswertet, Signale zur Ansteuerung der Hydraulikventile erzeugt und die Schaltkreise enthält, welche die Verzögerung der Hinterräder und die Verzögerung des Fahrzeugs oder eine die Verzögerung des Fahrzeugs näherungsweise wiedergebende Bezugsgröße ermitteln und diese Verzögerungswerte miteinander vergleichen.

Eine Schaltungsanordnung dieser Art ist der DE 33 06 611 A1 (GB-A-2 135 413) als bekannt zu entnehmen. Diese Schrift bezieht sich auf ein Verfahren zur Steuerung der Bremskraftverteilung, das auf der Messung und dem Vergleich des Bremsschlupfes an den Vrderrädern und an den Hinterrädern beruht. Es wird der Bremsschlupf an den Hinterrädern auf den Wert des Bremsschlupfes an den Vorderrädern oder auf einen etwas kleineren Wert begrenzt. Beim Auftreten eines die Blockierneigung der Hinterräder anzeigenden, durch Vergleich der Hinterradverzögerung mit der Fahrzeugverzögerung gewonnenen Signals wird der Bremsdruck an der Hinterachse reduziert.

Aus der Patentschrift DE 33 23 402 C2 ist bereits eine blockiergeschützte Bremsanlage mit elektromagnetisch betätigbaren Hydraulikventilen bekannt, die auch zur Steuerung der Bremskraftverteilung herangezogen werden. Hierzu ist im Druckmittelweg zu den Hinterradbremsen jeweils ein Einlaßventil eingefügt, durch dessen Ansteuerung der Druckaufbau in den Hinterradbremsen auch bei einer sogen. Teilbremsung, d.h. vor dem Einsetzen einer Blockierschutzregelung, gesteuert werden kann. Über ein Auslaßventil kann auch zur Steuerung oder Regelung der Bremskraftverteilung der Bremsdruck in den Hinterradbremsen reduziert werden. Dabei ist vorgesehen, den Bremsschlupf an den Hinterrädern durch Ansteuern der Hinterrad-Ventile auf einen bestimmten Prozentsatz, vorzugsweise 85 - 97% des Bremsschlupfes der Vorderräder zu begrenzen.

Durch eine solche Bremsanlage mit elektronischer Bremskraftverteilung (EBV) wird der Einbau eines herkömmlichen mechanischen oder hydraulischen Bremsdruckminders oder Bremsdruckreglers, mit dem bisher das Überbremsen der Hinterräder infolge einer statischen oder dynamischen Achslastverlagerung verhindert werden mußte, entbehrlich. Der Herstellungsaufwand für die Bremsanlage wird dadurch verringert. Hinzu kommt, daß beim Vorhandensein eines elektronischen Antiblockiersystems die hierfür erforderlichen Komponenten, insbesondere die Radsensoren und die Hydraulikventile, auch für die EBV-Funktion verwendet werden können.

Ein Problem bei diesen bekannten Bremsanlagen mit EBV-Funktion besteht darin, daß zur Bestimmung des tatsächlichen Schlupfes die Radgeschwindigkeit sehr genau gemessen werden muß. Durch die unvermeidlichen Unterschiede in den Abrollumfängen der einzelnen Räder wird bereits ein bestimmter Schlupf vorgetäuscht. Während einer Kurvenfahrt treten ebenfalls Radgeschwindigkeitsdifferenzen auf, die die Regelung fälschlicherweise als Schlupf interpretiert. Bei Ausfall einer Vorderradbremse sind bei einer EBV-Funktion auf Basis der Differenz zwischen dem Schlupf des Vorderrades und des Hinterrades besondere Maßnahmen erforderlich, um zu verhindern, daß der Bremsdruck in den Hinterradbremsen auf einen zu geringen Bremsdruck begrenzt wird.

Der Erfindung liegt nun die Aufgabe zugrunde, die geschilderten Nachteile bekannter Bremsanlagen mit EBV-Funktion zu überwinden. Es hat sich gezeigt, daß dies mit Hilfe einer Schaltungsanordnung der eingangs genannten Art gelingt, deren Besonderheit darin besteht, daß die Bremskraftverteilung auf Basis der Abweichung der Hinterradverzögerung von der Fahrzeugverzögerung bzw. von der die Verzögerung des Fahrzeugs näherungsweise wiedergebenden Bezugsgröße geregelt wird.

Erfindungsgemäß wird also eine von dem momentanen Radschlupf und insbesondere von der Schlupfdifferenz Vorderachse/Hinterachse weitgehend unabhängige elektronische Regelung der Bremskraftverteilung vorgeschlagen. Die bisher notwendigen hohen Anforderungen an die Messung und Berechnung der Radgeschwindigkeiten werden dadurch gemindert. Bei Ausfall einer Vorderradbremse bleibt der Meßwert für die Fahrzeugverzögerung oder die entsprechende Bezugsgröße zumindest annähernd richtig und damit die EBV-Funktion weiterhin erhalten.

Nach einem vorteilhaften Ausführungsbeispiel der Erfindung wird das die Geschwindigkeit eines Hinterrades wiedergebende Radsensorsignal über ein Differenzierglied einem Tiefpaß-Filter zugeführt, dessen Ausgangssignal mit Hilfe eines Differenzbilders und Integrators mit der Fahrzeugverzögerung oder der Bezugsgröße verglichen wird. Das Ausgangssignal dieses Differenzbilders und Integrators wird nach der Beziehung

$$x(t) = \int (b'_R - b_{FZ})\, dt$$

gebildet; dabei bedeuten

$b'_R$ = gefiltertes Verzögerungssignal des rechten ($b'_3$) bzw. linken ($b'_4$) Hinterrades,

$b_{FZ}$ = Fahrzeugverzögerung bzw. der Fahrzeugverzögerung angenäherte Bezugsgröße.

In Abhängigkeit von dem Ausgangssignal des Differenzbilders und Integrators wird der Bremsdruck in der zugehörigen Hinterradbremse reduziert, konstantgehalten oder weiter erhöht. Maßgebend ist die Höhe des Ausgangssignals, das hierzu mit vorgegebenen Schwellwerten verglichen wird.

In den Unteransprüchen sind noch weitere vorteilhafte Ausführungsbeispiele genannt.

Die Erfindung wird im folgenden anhand der beigefügten Abbildungen näher erläutert.

Es zeigen

Fig. 1 in schematisch vereinfachter Darstellung die wichtigsten Komponenten eines Ausführungsbeispiels einer Bremsanlage mit Blockierschutzregelung (ABS) und elektronischer Bremskraftverteilung (EBV),

Fig. 2 in schematisch vereinfachter Darstellung eine elektronische Schaltungsanordnung nach der Erfindung zur Regelung der Bremskraftverteilung für die Bremsanlage nach Fig. 1, und

Fig. 3A, 3B,3C Diagramme zur Erläuterung der Arbeitsweise der Schaltungsanordnung nach Fig. 2.

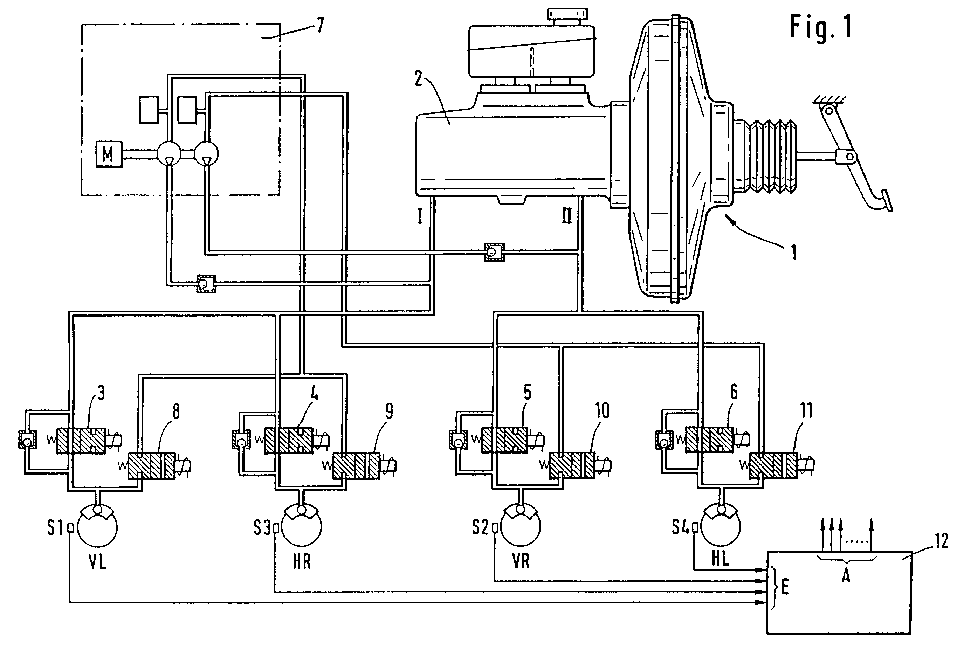

Fig. 1 dient zur Erläuterung des grundsätzlichen Aufbaues einer Bremsanlage mit ABS- und EBV-Funktion. An die beiden hydraulischen Kreise I,II eines pedalbetätigten Bremsdruckgebers 1 sind die Radbremsen eines Fahrzeugs in dem dargestellten Ausführungsbeispiel diagonal angeschlossen. Die Vorderräder sind in Fig. 1 mit VL,VR, die Hinterräder mit HR,HL bezeichnet. In die Druckmittelwege, die von dem Hauptzylinder 2 des Bremsdruckgebers 1 zu jeder einzelnen Radbremse führen, ist je ein in der Ruhestellung auf Durchlaß geschaltetes, elektrisch betätigbares Einlaßventil 3 bis 6 eingefügt. In Rückflußleitungen, die von den Radbremsen der einzelnen Räder zu einem hydraulischen Pumpensystem 7 führen, sind in der Ruhestellung gesperrte, ebenfalls elektrisch betätigbare Auslaßventile 8 bis 11 eingefügt. Natürlich ist EBV auch bei Bremsanlagen mit anderer Aufteilung der hydraulischen Bremskreise möglich.

Für die elektronische Regelung der Bremskraftverteilung sind lediglich die zu den Hinterradbremsen gehörenden Hydraulikventile 4,9;6,11 erforderlich. Für die Blockierschutzregelung werden alle Einlaß- und Auslaßventile 3 bis 6 bzw. 8 bis 11 benötigt.

Jedes Fahrzeugrad ist mit einem Radsensor S1 bis S4 ausgerüstet, dessen Ausgangssignale in einem Regler 12, der die elektronischen Schaltungen zur Regelung der Bremskraftverteilung und zur Blockierschutzregelung enthält, ausgewertet werden. In diesem Regler 12 werden auch die Signale zur Steuerung der Hydraulikventile 3 bis 11 erzeugt, die an die Ausgänge A des Reglers 12 angeschlossen sind. Mit "E" sind die Sensor-Eingänge des Reglers 12 bezeichnet.

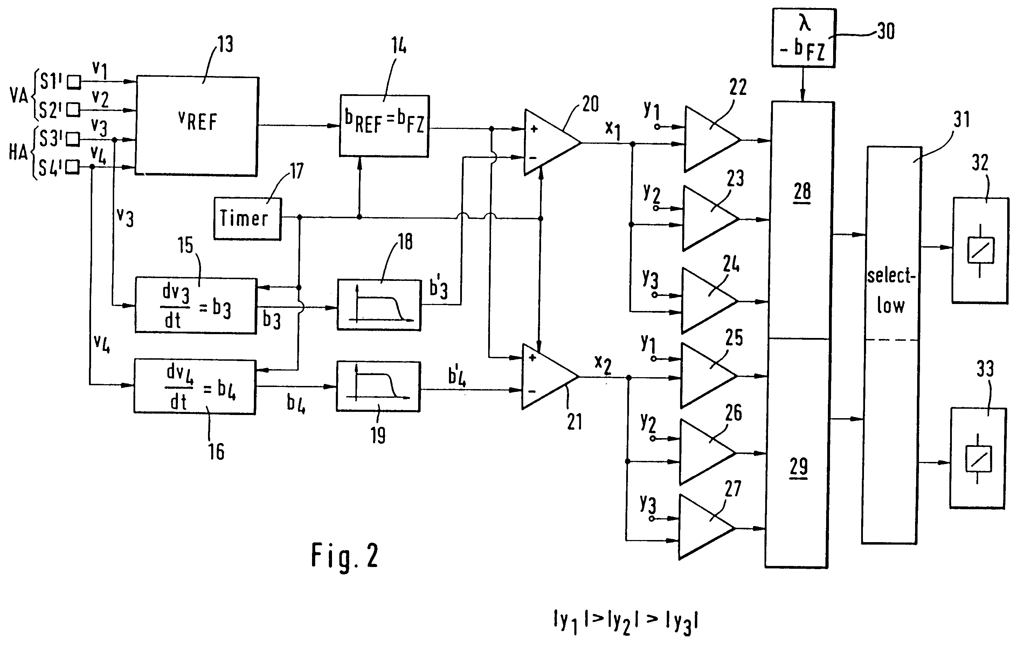

Der Schaltung nach Fig. 2, die Bestandteil des Reglers 12 nach Fig. 1 ist, werden als Eingangssignale S1' bis S4' die aufbereiteten Sensorsignale S1 bis S4 zugeführt. Die Signale S1' und S2' geben das Drehverhalten der Vorderräder, die Signale S3',S4' das Drehverhalten der Hinterräder wieder. Durch logische Verknüpfung der Sensorsignale S1' bis S4' wird in bekannter Weise eine Fahrzeugreferenzgeschwindigkeit gebildet, die die Fahrzeuggeschwindigkeit näherungsweise wiedergibt. Im EBV-Modus könnte auch die Geschwindigkeit $v_1,v_2$ der Vorderräder VR,VL als Referenzgröße ausgewertet werden. Die Fahrzeugreferenzgeschwindigkeit ist in Fig. 2 mit $v_{REF}$ bezeichnet. $v_{REF}$ wird in einem Verknüpfungsschaltkreis 13 gebildet. Zur Ermittlung der Bezugsgröße $b_{FZ} = b_{REF}$ wird die Fahrzeugreferenzgeschwindigkeit $v_{REF}$ in einem Schaltkreis 14 differenziert.

Die Verzögerung der Hinterräder wird in analoger Weise mit Hilfe der Differenzierglieder 15 und 16 gebildet. Der Arbeitstakt für diese Differenzierglieder 14 bis 16 liefert im dargestellten Beispiel ein Taktgeber oder Timer 17.

Die Verzögerungssignale $b_3,b_4$, die die Hinterradverzögerung wiedergeben, werden jeweils über ein als Tiefpaß ausgelegtes Filter 18,19, das als Verzögerungsglied und zur Störungsunterdrückung dient, jeweils einem Differenzbilder und Integrator 20,21 zugeführt. Es wird jeweils die Abweichung der Verzögerung eines Hinterrades $b_3,b_4$ bzw. $b'_3,b'_4$ von der Fahrzeugverzögerung $b_{FZ}$ ermittelt. Die Ausgangssignale $x_3,x_4$ der Differenzbilder und Integratoren 20,21 werden nach der Beziehung

$$x(t) = \int (\frac{dv_R}{dt} - b_{REF})dt = \int (b'_R - b_{REF})\, dt$$

gebildet. Im dargestellten Ausführungsbeispiel gilt $x_1$ für das rechte Hinterrad HR, $x_2$ für das linke Hinterrad HL.

Die Ausgangssignale x(t) bzw. $x_1,x_2$ der Differenzbilder und Integratoren 20,21, die ständig die Differenz zwischen der gefilterten Hinterradverzögerung $b'_3,b'_4$ und Fahrzeugverzögerung $b_{REF}$ ermitteln und zu dem im vorangegangenen Takt ermittelten Meßwert addieren oder subtrahieren, werden dann in Komparatoren 22 bis 27 mit vorgegebenen Schwellwerten $y_1,y_2,y_3$ verglichen. Betragsmäßig gilt: $y_1 > y_2 > y_3$. In den Komparatoren 22 bis 24 erfolgt der Vergleich für das Ausgangssignal des Differenzbilders und Integrators 20, also für das rechte Hinterrad, in den Komparatoren 25 bis 27 für das linke Hinterrad.

Die Auswertung der Ausgangssignale der Komparatoren 22 bis 27 in Ventilansteuerungsschaltkreisen 28,29 setzt ein, sobald ein Schaltkreis 30 EBV-Funktion signalisiert. Eine EBV-Funktion setzt voraus, daß ein Fahrzeug-Verzögerungssignal ($-b_{FZ}$) und ein Bremsschlupfsignal ( ) vorhanden sind.

Wird nach dem Erkennen der EBV-Funktion der Integratorinhalt 20,21 bzw. dessen Ausgangssignal x(t), d.h. $x_1$ oder $x_2$, betragsmäßig größer als der Schwellwert $y_2$, hat dies bei weiterem Ansteigen des Bremsdruckes in der Vorderradbremse eine Konstanthaltung des Bremsdruckes in der Hinterradbremse zur Folge. Übersteigt das Ausgangssignal $x_1$ betragsmäßig den Schwellwert $y_1$, wobei betragsmäßig $y_1 > y_2$ gilt, führt dies zu einem Abbau des Bremsdruckes in der jeweiligen Hinterradbremse. Sinkt anschließend das Ausgangssignal $x_1$ des durch diesen Bremsdruckabbau stabilisierten Rades unter den Schwellwert $y_3$, kann eine weitere Erhöhung des Bremsdruckes in der betrachteten Hinterradbremse durch Druckaufbaupulse stattfinden.

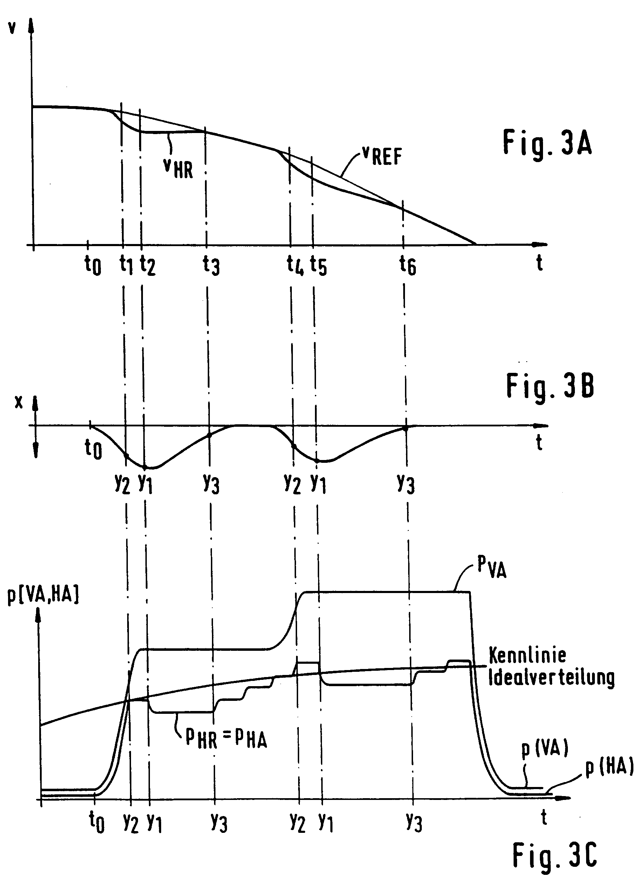

In den Figuren 3A,3B und 3C sind Diagramme zur Veranschaulichung der EBV-Funktion wiedergegeben. In der Situation, auf die sich Fig. 3A bis 3C beziehen, setzt zum Zeitpunkt $t_0$ die Bremsbetätigung ein. In Fig. 3A ist die Fahrzeugreferenzgeschwindigkeit $v_{REF}$, welche näherungsweise die Fahrzeuggeschwindigkeit wiedergibt, und der Geschwindigkeitsverlauf $v_{HR}$ eines Hinterrades in dieser EBV-Situation wiedergegeben. Wie Fig. 3B zeigt, übersteigt das negative Signal $x_1$ zum Zeitpunkt $t_1$ den vorgegebenen Schwellwert $y_2$. Zu diesem Zeitpunkt $t_1$ verzögert das Fahrzeug und es liegt Bremsschlupf vor, so daß die Schaltung 30 EBV-Funktion erkennt. Nach Fig. 3C hat das Überschreiten des Schwellwertes $y_2$ die Konstanthaltung des Hinterachsbremsdruckes $p_{HR}$ zur Folge. Zum Zeitpunkt $t_2$ wird sogar der Schwellwert $y_1$ überschritten und dadurch ein Bremsdruckabbau (siehe Fig. 3C) ausgelöst. Zum Zeitpunkt $t_3$ wird der Schwellwert $y_3$ erreicht, so daß ein erneuter, gepulster Druckanstieg in der Bremse des rechten Hinterrades $p_{HR}$ einsetzen kann. Zum Zeitpunkt $t_4$ beginnt erneut eine Druckkonstanthaltung im Hinterrad, gefolgt von einer Druckabsenkung zum Zeitpunkt $t_5$ und schließlich einem erneuten Druckaufbau zum Zeitpunkt $t_6$. Zum Zeitpunkt $t_7$ wird die Bremsbetätigung beendet.

Fig. 3C, in der sowohl der Bremsdruckverlauf an der Vorderachse $p_{VA}$ als auch an der Hinterachse $p_{HA}$ in dem geschilderten Beispiel und die Kennlinie des Druckverlaufs bei idelaer Bremsdruckverteilung auf Vorder- und Hinterachse wiedergegeben sind, veranschaulicht, daß durch die EBV-Funktion die Idealverteilung sehr gut angenähert wird.

In dem Beispiel nach Fig. 3C stimmt der Druckverlauf $p_{HR}$ im rechten Hinterrad mit dem Druckverlauf des zweiten Hinterrades überein. Dies wurde durch einen select-low-Schaltkreis 31 nach Fig. 2 erreicht, der dafür Sorge trägt, daß stets das Hinterrad mit dem niedrigeren Bremsdruck den Druckverlauf $p_{HA}$ an der Hinterachse führt. Grundsätzlich ist mit der erfindungsgemäßen Schaltungsanordnung jedoch auch eine individuelle Bremsdrucksteuerung im EBV-Modus in den Radbremsen der Hinterachsräder möglich.

Die Ausgangssignale des Select-low-Schaltkreises 31 nach Fig. 2 werden schließlich den symbolisch dargestellten Hinterradventilen 32,33, die den tatsächlichen Bremsdruckverlauf in den Hinterradbremsen bestimmen, zugeführt. Bei reiner Select-low-Regelung genügt ein Ausgang des Schaltkreises 31 zur Ansteuerung der Einlaß-/Auslaßventile 32,33 beider Hinterradbremsen. Zur radindividuellen Regelung des Hinterrad-Bremsdruckes in bestimmten Situationen sind natürlich, wie dargestellt, separate Ausgänge der Ventilansteuerung 31, erforderlich.

Die Regelung der Bremskraftverteilung mit der erfindungsgemäßen Schaltungsanordnung auf Basis der Differenz zwischen der Fahrzeugverzögerung und der Hinterradverzögerung wird zweckmäßigerweise mit der an sich bekannten schlupfabhängigen Regelung kombiniert. Es wird dabei grundsätzlich derjenigen Regelung Vorrang eingeräumt, die in Abhängigkeit von der jeweiligen Situation, d.h. in Abhängigkeit von hohem oder niedrigem Reibwert, homogenem oder unterschiedlichem Reibwert rechts/links, Kurven- oder Geradeausfahrt usw., die höhere Regelungsgenauigkeit und Sicherheit zuläßt.

**Patentansprüche**

1. Schaltungsanordnung für eine Bremsanlage mit elektronischer Steuerung und Regelung der Bremskraftverteilung auf Vorderachse und Hinterachse (EBV), mit elektrisch steuerbaren Hydraulikventilen (3-6,8-11), die in den zu den Hinterradbremsen führenden Druckmittelleitungen und in Rückflußleitungen eingefügt sind, mit Radsensoren (S1-S4) zur Ermittlung des Raddrehverhaltens und mit einer elektronischen Schaltung (12), die die Sensorsignale auswertet, die Signale zur Ansteuerung der Hydraulikventile (3-6,8-11) erzeugt und die Schaltkreise (15-30) enthält, welche die Verzögerung ($b_{3,4}$;$b'_{3,4}$) der Hinterräder (HR,HL) und die Verzögerung des Fahrzeugs ($b_{FZ}$) oder eine die Verzögerung des Fahrzeugs näherungsweise wiedergebende Bezugsgröße ($b_{REF}$) ermitteln und diese Verzögerungswerte ($b_{3,4}$;$b'_{3,4}$;$b_{FZ}$ oder $b_{REF}$) miteinander vergleichen, dadurch **gekennzeichnet**, daß die Bremskraftverteilung auf Basis der Abweichung der Hinterradverzögerung ($b_3,b_4$) von der Fahrzeugverzögerung ($b_{FZ}$) bzw. von der die Verzögerung des Fahrzeugs näherungsweise wiedergebenden Bezugsgröße ($b_{REF}$) geregelt wird.

2. Schaltungsanordnung nach Anspruch 1, dadurch **gekennzeichnet** , daß das die Geschwindigkeit ($V_3,V_4$) eines Hinterrads (HR,HL) wiedergebende Radsensorsignal über ein Differenzierglied (15,16) einem als Tiefpaß ausgelegten Filter (18,19) zugeführt wird, dessen Ausgangssignal ($b'_3,b'_4$) mit Hilfe eines Differenzbilders und Integrators (20,21) mit der Fahrzeugverzögerung ($b_{FZ}$) oder der Bezugsgröße ($b_{REF}$) verglichen wird, und daß in Abhängigkeit von dem Ausgangssignal($x_1$,$x_2$)des Differenzbilders und Integrators (20,21) der Bremsdruck in der zugehörigen Hinterradbremse reduziert, konstantgehalten oder weiter erhöht wird.

3. Schaltungsanordnung nach Anspruch 1, dadurch **gekennzeichnet**, daß das Ausgangssignal ($x_1$,$x_2$) des Differenzbilders und Integrators (20,21) nach der Beziehung

$$x(t) = \int (b'_R - b_{FZ})\, dt$$

gebildet wird, wobei bedeuten:

$b'_R$ = gefiltertes Verzögerungssignal des rechten ($b'_3$) bzw. linken ($b'_4$) Hinterrades,
$b_{FZ}$ = Fahrzeugverzögerung oder der Fahrzeugverzögerung angenäherte Bezugsgröße ($b_{REF}$).

4. Schaltungsanordnung nach Anspruch 2 oder 3, dadurch **gekennzeichnet**, daß das Ausgangssignal ($x_1$,$x_2$) des Differenzbilders und Integrators (20,21) mit vorgegebenen Schwellwerten ($y_1$,$y_2$,$y_3$) verglichen wird, bei deren Überschreiten der Bremsdruck in der zugehörigen Hinterradbremse reduziert ($y_1$), konstantgehalten ($y_2$) oder weiter erhöht wird ($y_3$).

5. Schaltungsanordnung nach einem oder mehreren der Ansprüche 1 bis 4, dadurch **gekennzeichnet**, daß in an sich bekannter Weise durch logische Verknüpfung der Radsensorsignale ($v_1$ bis $v_4$) eine Fahrzeugreferenzgeschwindigkeit ($v_{REF}$), die näherungsweise die Fahrzeuggeschwindigkeit ($v_{FZ}$) wiedergibt, gebildet und einem Differenzierglied (14) zugeführt wird, dessen Ausgangssignal ($b_{REF}$) als Bezugsgröße auswertbar ist.

6. Schaltungsanordnung nach einem oder mehreren der Ansprüche 1 bis 4, dadurch **gekennzeichnet**, daß die Verzögerung der Vorderräder (VR,VL) die Bezugsgröße ($b_{FZ}$) ist.

7. Schaltungsanordnung nach einem oder mehreren der Ansprüche 1 bis 6, dadurch **gekennzeichnet**, daß der Bremsdruck in den Hinterradbremsen radindividuell geregelt wird.

8. Schaltungsanordnung nach einem oder mehreren der Ansprüche 1 bis 6, dadurch **gekennzeichnet**, daß der Bremdruck ($p_{HA}$) in den Hinterradbremsen nach dem Select-low-Auswahlprinzip (mit Hilfe der Schaltung 31) gemeinsam geregelt wird, wobei sich der Bremsdruck in beiden Hinterradbremsen nach dem Rad mit dem niedrigeren Bremsdruck richtet.

9. Schaltungsanordnung nach einem oder mehreren der Ansprüche 1 bis 8, dadurch **gekennzeichnet**, daß die Differenz zwischen dem Radschlupf der Hinterräder und dem Radschlupf der Vorderräder als zusätzliche Regelgröße für die Bremskraftverteilung ausgewertet wird.

## Claims

1. Circuit arrangement for a brake system with electronic control and adjustment of the brake force distribution to the front axle and the rear axle (EBV), including electrically controllable hydraulic valves (3-6, 8-11) inserted in the pressure fluid conduits leading to the rear-wheel brakes and in return conduits, wheel sensors (S1-S4) to determine the wheel rotational behavior, and an electronic circuit (12) which evaluates the sensor signals, generates signals to actuate the hydraulic valves (3-6, 8-11) and includes circuits (15-30) which determine the deceleration ($b_{3,4}$; $b'_{3,4}$) of the rear wheels (HR, HL) and the deceleration of the vehicle ($b_{FZ}$) or a reference quantity ($b_{REF}$) representative of the deceleration of the vehicle in approximation, and which compare these deceleration values($b_{3,4}$; $b'_{3,4}$; $b_{FZ}$ or $b_{REF}$), **characterized** in that the brake force distribution is controlled on the basis of the discrepancy of the rear-wheel deceleration ($b_3$, $b_4$) from the vehicle deceleration ($b_{FZ}$) or from the reference quantity ($b_{REF}$) representative of the deceleration of the vehicle in approximation.

2. Circuit arrangement as claimed in claim 1,
**characterized** in that the wheel sensor signal representative of the speed ($V_3$, $V_4$) of a rear wheel (HR, HL) is sent to a filter provided as a low-pass filter (18, 19) by way of a differentiating circuit (15, 16), and the output signal ($b'_3$, $b'_4$) of the low-pass filter is compared with the vehicle deceleration ($b_{FZ}$) or the reference quantity ($b_{REF}$) by a differentiator and integrator (20, 21), and in that the braking pressure in the associated rear-wheel brake is reduced, kept constant or increased further as a function of the output signal ($x_1$, $x_2$) of the differentiator and integrator (20, 21).

3. Circuit arrangement as claimed in claim 1,
**characterized** in that the output signal ($x_1$, $x_2$) of the differentiator and integrator (20, 21) is produced according to the relation

$$x(t) = \int (b'_R - b_{FZ})\, dt, \text{ and}$$

$b'_R$ is the filtered deceleration signal of the right ($b'_3$) or left ($b'_4$) rear wheel,
$b_{FZ}$ is the vehicle deceleration or a reference quantity ($b_{REF}$) in approximation of the vehicle deceleration.

4. Circuit arrangement as claimed in claim 2 or claim 3,
**characterized** in that the output signal ($x_1$, $x_2$) of the differentiator and integrator (20, 21) is compared with predetermined limit values ($y_1$, $y_2$, $y_3$), and, in excess of these limit values, the braking pressure in the associated rear-wheel brake is reduced ($y_1$), kept constant ($y)_2$ or increased further ($y_3$).

5. Circuit arrangement as claimed in any one or more of claims 1 to 4,
**characterized** in that a vehicle reference speed ($v_{REF}$), which represents the vehicle speed ($v_{FZ}$) in approximation, is produced in a per se known fashion by logically linking the wheel sensor signals ($v_1$ to $v_4$) and is conducted to a differentiating circuit (14) whose output signal ($b_{REF}$) can be evaluated as a reference quantity.

6. Circuit arrangement as claimed in any one or more of claims 1 to 4,
**characterized** in that the deceleration of the front wheels (VR, VL) is the reference quantity ($b_{FZ}$).

7. Circuit arrangement as claimed in any one or more of claims 1 to 6,
**characterized** in that the braking pressure in the rear-wheel brakes is controlled individually for each wheel.

8. Circuit arrangement as claimed in any one or more of claims 1 to 6,
**characterized** in that the braking pressure ($p_{HA}$) in the rear-wheel brakes is controlled jointly according to the select-low principle (by way of circuit 31), and the braking pressure in the two rear-wheel brakes is dictated by the wheel having the lower braking pressure.

9. Circuit arrangement as claimed in any one or more of claims 1 to 8,
**characterized** in that the difference between the wheel slip of the rear wheels and the wheel slip of the front wheels is evaluated as an additional control quantity for the brake force distribution.

**Revendications**

1. Agencement de circuit pour système de freinage à commande et régulation électroniques de la répartition de la force de freinage sur l'essieu avant et l'essieu arrière (EBV), comprenant des valves hydrauliques (3-6, 8-11) à commande électrique, qui sont interposées dans les conduites d'agent de pression menant aux freins de roue arrière et dans des conduites de retour, des capteurs de roue (S1-S4), servant à déterminer le comportement des roues en rotation, et un circuit électronique (12) qui analyse les signaux de capteur, produit les signaux servant à commander les valves hydrauliques (3-6, 8-11) et contient les circuits (15-30) qui déterminent la décélération ($b_{3,4}$ ; $b'_{3,4}$) des roues arrière (HR, HL) et la décélération du véhicule ($b_{FZ}$) ou une grandeur de référence ($b_{REF}$) reproduisant approximativement la décélération du véhicule et qui compare l'une à l'autre ces valeurs de décélération ($b_{3,4}$ ; $b'_{3,4}$ ; $b_{FZ}$ ou $b_{REF}$), caractérisé en ce que la répartition de force de freinage est réglée sur la base de l'écart de la décélérations de roue arrière ($b_3$, $b_4$) par rapport à la décélération de véhicule ($b_{FZ}$) ou à la grandeur de référence ($b_{REF}$) reproduisant approximativement la décélération du véhicule.

2. Agencement de circuit suivant la revendication 1, caractérisé en ce que le signal de capteur de roue reproduisant la vitesse ($V_3$, $V_4$) d'une roue arrière (HR, HL) est envoyé par l'intermédiaire d'un circuit de formation de dérivée (15, 16) à un filtre (18, 19) agencé en passe-bas dont le signal de sortie ($b'_3$, $b'_4$) est comparé à la décélération de véhicule ($b_{FZ}$) ou à la grandeur de référence ($b_{REF}$) au moyen d'un circuit de formation de différence et intégrateur (20, 21) et en ce qu'en fonction du signal de sortie ($x_1$, $x_2$) du circuit de formation de différence et intégrateur (20, 21), la pression dans le frein arrière associé est réduite, maintenue constante ou davantage augmentée.

3. Agencement de circuit suivant la revendication 1, caractérisé en ce que le signal de sortie ($x_1$, $x_2$) du circuit de for-

mation de différence et intégrateur (20, 21) est formé conformément à la relation :

$$x(t) = \int (b'_R - b_{FZ}) dt$$

dans laquelle :

$b'_R$ désigne le signal de décélération filtré de la roue arrière droite ($b'_3$) ou gauche ($b'_4$),
$b_{FZ}$ désigne la décélération de véhicule ou la grandeur de référence ($b_{REF}$) approchant la décélération de véhicule.

4. Agencement de circuit suivant la revendication 2 ou 3, caractérisé en ce que le signal de sortie ($x_1$, $x_2$) du circuit de formation de différence et intégrateur (20, 21) est comparé à des valeurs de seuil ($y_1$, $y_2$, $y_3$) préfixées lors du franchissement desquelles la pression dans le frein de roue arrière correspondant est réduite ($y_1$), maintenue constante ($y_2$) ou davantage augmentée ($y_3$).

5. Agencement de circuit suivant une ou plusieurs des revendications 1 à 4, caractérisé en ce que, d'une manière connue par elle-même, au moyen d'une combinaison logique des signaux de capteur de roue ($v_1$ à $v_4$), une vitesse de référence de véhicule ($v_{REF}$), qui reproduit approximativement la vitesse de véhicule ($v_{FZ}$), est formée et est envoyée à un circuit de formation de dérivée (14) dont le signal de sortie ($b_{REF}$) peut être exploitée en tant que grandeur de référence.

6. Agencement de circuit suivant une ou plusieurs des revendications 1 à 4, caractérisé en ce que la décélération des roues avant ($V_R$, $V_L$) est la grandeur de référence ($b_{FZ}$).

7. Agencement de circuit suivant une ou plusieurs des revendications 1 à 6, caractérisé en ce que la pression dans les freins de roue arrière fait l'objet d'une régulation roue par roue.

8. Agencement de circuit suivant une ou plusieurs des revendications 1 à 6, caractérisé en ce que la pression ($p_{HA}$) dans les freins de roue arrière fait l'objet d'une régulation commune conformément au principe de sélection basse (au moyen du circuit 31), la pression dans les deux freins de roue arrière se réglant sur la roue présentant la pression de frein la plus faible.

9. Agencement de circuit suivant une ou plusieurs des revendications 1 à 8, caractérisé en ce que la différence entre le glissement de roue des roues arrière et le glissement de roue des roues avant est exploitée en tant que grandeur supplémentaire de régulation pour la répartition de force de freinage.

Fig. 1

EP 0 759 863 B1

8

Fig. 2

$|y_1| > |y_2| > |y_3|$

EP 0 759 863 B1

v

$v_{HR}$

$v_{REF}$

$t_0$  $t_1$ $t_2$  $t_3$  $t_4$ $t_5$  $t_6$  t

# Fig. 3A

x

$t_0$  t

$y_2$ $y_1$  $y_3$  $y_2$ $y_1$  $y_3$

# Fig. 3B

p[VA,HA]

$P_{VA}$

Kennlinie
Idealverteilung

$p_{HR} = p_{HA}$

p(VA)

p(HA)

$t_0$  $y_2$ $y_1$  $y_3$  $y_2$ $y_1$  $y_3$  t

# Fig. 3C